# EUROPÄISCHE PATENTANMELDUNG

(11) **EP 1 990 239 A2**
(43) Veröffentlichungstag der Anmeldung: **12.11.2008**
(21) Anmeldenummer: 08008561.6
(22) Anmeldetag: 07.05.2008
(51) Int. Cl.: B60R 1/074

(54) **Fahrzeugspiegel**

(30) Priorität: 09.05.2007 DE 102007022244
(71) Anmelder: Metallwarenfabrik Wilke GmbH & Co. KG, 38302 Wolfenbüttel (DE)
(72) Erfinder: Rosenthal, Dirk, 38300 Wolfenbüttel (DE); Pretzsch, Thomas, 38239 Salzgitter (DE)
(74) Vertreter: Plöger, Jan Manfred

(57) **Zusammenfassung**

Fahrzeugspiegel, insbesondere Pkw-Spiegel, mit einem Fuß (12), der ausgebildet ist zum Befestigen des Fahrzeugspiegels (10) an einem Fahrzeug, einem Spiegelträger (14), der an dem Fuß (12) verschwenkbar so gelagert ist, dass er in eine Betriebsstellung und eine Parkstellung bringbar ist, einem Schwenkantrieb (22) zum automatischen Verschwenken des Spiegelträgers (14) relativ zu dem Fuß (12) um eine Schwenkachse (S) und einer Rastvorrichtung (18, 20), die ausgebildet ist, um den Fuß (12) relativ zum Spiegelträger (14) in der Parkstellung reversibel zu verrasten. Erfindungsgemäß ist vorgesehen, dass die Rastvorrichtung (18, 20) ausgebildet ist zum reversiblen Verrasten von Fuß (12) und Spiegelträger (14) ausschließlich dann, wenn der Spiegelträger (14) bei nicht betätigtem Schwenkantrieb (22) verschwenkt wird.

## Beschreibung

Die Erfindung betrifft einen Fahrzeugspiegel gemäß dem Oberbegriff von Anspruch 1.

Derartige Fahrzeugspiegel sind bekannt und werden beispielsweise an Personenkraftwagen eingesetzt. Während des Betriebs des Fahrzeugs, also dann, wenn mit dem Fahrzeug gefahren wird, befindet sich der Spiegelträger relativ zum Fuß und damit relativ zum Personenkraftwagen in einer Betriebsstellung, so dass ein Fahrer des Personenkraftwagens eine Rückblickmöglichkeit aufgrund eines mit dem Spiegelträger verbundenen Spiegels hat. Der Fahrzeugspiegel ist zudem in eine Parkstellung bringbar, um die Breite des Fahrzeugs, beispielsweise beim Parken oder in Waschstraßen, zu verringern.

Aus der DE 100 23 052 A1 ist ein Außenrückblickspiegel für Fahrzeuge bekannt, der motorisch oder von Hand aus einer Betriebsstellung in eine Parkstellung geschwenkt werden kann. Um den Spiegelkopf auf einfache Weise verstellen und sichern zu können, ist der Spiegelkopf in der Parkstellung durch mindestens ein Rastglied gesichert, das mit einem Rastgegenglied zusammenwirkt.

Aus der DE 35 38 159 C1 ist ein fernbedienbarer schwenkbarer Außenspiegel für Nutzfahrzeuge bekannt, bei dem ein Getriebestellmotor über eine Rutschkupplung mit dem Spiegel verbunden ist. In Redundanz zur Rutschkupplung ist ein Kupplungsstift vorgesehen, der ein definiertes Bruchverhalten aufweist. Dadurch wird der Spiegelantrieb vor Zerstörung geschützt, wenn ein Objekt auf den Spiegel aufprallt.

Aus der DE 10 2005 021 757 A1 ist ein Außenrückblickspiegel für Fahrzeuge bekannt, der so verbessert ist, dass er in oder entgegen der Fahrtrichtung geschwenkt werden kann und dabei mit geringem Kraftaufwand in einer sicheren Parkpositionierung gehalten wird. Dazu besitzt der Außenrückblickspiegel zwei parallel zueinander liegende Gelenkachsen und wenigstens einen U-förmigen Ansatz.

Aus der DE 600 09 737 T2 ist eine Spiegelanordnung mit einem einer Tellerfeder vorgespannten Gelenk bekannt. Durch eine spezielle Form der Tellerfeder wird erreicht, dass nach Überwinden einer Losbrechkraft die zum weiteren Schwenken notwendige Kraft beständig abnimmt. So kann der Spiegel, beispielsweise nach einem Zusammenstoß mit einem Objekt, leicht wegschwenken.

Aus der DE 10 2005 049 190 ist ein Außenrückblickspiegel für Fahrzeuge bekannt, der eine Rastverbindung besitzt. Die Rastverbindung ist so ausgebildet, dass sie bei in Fahrtrichtung nach vorn abgeklapptem Spiegelkopf außer Eingriff ist. So wird der Spiegelkopf zuverlässig in der Gebrauchsstellung lagegesichert und gleichzeitig in der abgeklappten Parkstellung zuverlässig gehalten.

Aus der DE 198 33 672 C2 ist ein Außenrückblickspiegel für Kraftfahrzeuge bekannt, der manuell von einer Parkposition in eine Betriebsposition oder umgekehrt bringbar ist, wobei der Außenrückblickspiegel aus jeder Stellung leicht mit einem Stellmotor in eine vorgebbare Position fahrbar ist.

Aus der DE 100 09 670 B4 ist ein Außenrückblickspiegel für ein Kraftfahrzeug bekannt, der so ausgestaltet ist, dass der Spiegelkopf durch einen Motor wieder in eine Fahrposition schwenkbar ist, wenn der Spiegel zuvor manuell abgeklappt wurde.

Nachteilig bei allen Außenrückblickspiegeln ist, dass es regelmäßig zu Schäden an derartigen Fahrzeugspiegeln kommt, wenn das entsprechende Fahrzeug durch eine Waschstraße bewegt wird. So kommt es vor, dass in der Waschstraße vorhandene rotierende Bürsten den Spiegelträger vom Fuß abreißen oder ihn an seiner bezüglich des Fahrzeugs äußeren Seite verkratzen.

Es ist zwar bekannt, den Fahrzeugspiegel in der Parkposition zu verrasten, das aber hat den Nachteil, dass der Schwenkantrieb so groß dimensioniert sein muss, dass das entsprechende Losbrechmoment sicher überwunden wird. Das aber erhöht die Kosten und bedeutet ein zusätzliches Gewicht, was nachteilig ist.

Der Erfindung liegt die Aufgabe zugrunde, einen Fahrzeugspiegel anzugeben, der mit einem klein dimensionierten Schwenkantrieb auskommt und bei dem gleichzeitig die Wahrscheinlichkeit von Schäden beim Durchfahren einer Waschstraße reduziert ist.

Die Erfindung löst das Problem durch einen gattungsgemäßen Fahrzeugspiegel, der eine Rastvorrichtung aufweist, die zum reversiblen Verrasten von Fuß- und Spiegelträger in der Parkstellung ausgebildet ist.

Hierdurch wird erreicht, dass Erschütterungen oder Waschbürsten einer Waschstraße nicht mehr in der Lage sind, den Fahrzeugspiegel ohne Wollen des Fahrers aus der Parkstellung in die Betriebsstellung zu bringen. Auf diese Weise werden beispielsweise Beschädigungen des Fahrzeugspiegels in Waschstraßen oder während eines Transports des Fahrzeugs auf einem Fahrzeugtransporter verhindert.

Es ist ein Vorteil der vorliegenden Erfindung, dass sie einfach zu implementieren ist. So ist es lediglich notwendig, eine einfache Rastverbindung vorzusehen, was konstruktiv mit einfachen Mitteln möglich ist. Das äußere Erscheinungsbild des Fahrzeugspiegels ändert sich dadurch nicht.

Vorteilhaft ist zudem, dass die Erfindung nur zu einem vernachlässigbar kleinen Zusatzgewicht des Fahrzeugspiegels führt und außerdem keine Veränderungen an dem Fahrzeug notwendig sind.

Unter dem Fuß des Fährzeugspiegels wird im Rahmen der vorliegenden Erfindung insbesondere jede Komponente des Fahrzeugspiegels verstanden, die ausgebildet ist, um eine Verbindung zwischen dem Spiegelträger und dem Fahrzeug, insbesondere dem Personenkraftwagen, herzustellen. Beispielsweise ist der Fuß ausgebildet,

um den Fahrzeugspiegel im vorderen, in der Umgebung der A-Säule angeordneten Dreieck einer Fahrzeugtür eines Personenkraftwagens zu befestigen.

Unter einem Spiegelträger wird insbesondere jede Komponente verstanden, die ausgebildet ist, um ein Spiegelelement, wie beispielsweise einen Glasspiegel, zu haltern. Der Spiegelträger kann beispielsweise Stellmotoren zum Bewegen des Spiegelelements und eine Heizung für das Spiegelelement umfassen.

Unter einer Betriebsstellung wird diejenige Stellung des Spiegelträgers relativ zum Fuß verstanden, den dieser einnimmt, wenn das Fahrzeug, an dem der Fahrzeugspiegel befestigt ist, in Betrieb ist. In dieser Betriebsstellung ist das Spiegelelement so relativ zum Fahrzeug ausgerichtet, dass es dem Fahrer des Fahrzeugs einen Rückblick gestattet. Entsprechend wird unter der Parkstellung eine Stellung des Spiegelträgers relativ zum Fuß verstanden, bei dem eine Breite des Fahrzeugs, an dem der Fahrzeugspiegel montiert ist, reduziert ist. In anderen Worten ist der Spiegelträger in der Betriebsstellung ausgeklappt und in der Parkstellung ein- bzw. beigeklappt. In der eingeklappten Stellung ist ein Winkel zwischen Spiegelträger und Fuß kleiner als in der Betriebsstellung.

Unter einer Rastvorrichtung wird insbesondere eine Komponente verstanden, die das Drehmoment, das zum Verschwenken des Spiegelträgers relativ zum Fuß notwendig ist, in einem vorgegebenen Schwenkwinkelintervall erhöht (Losbrechmoment).

In einer bevorzugten Ausführungsform umfasst die Rastvorrichtung einen Rastvorsprung und ein Federelement, die so zueinander angeordnet sind, dass der Rastvorsprung bei einem Verschwenken des Spiegelträgers relativ zum Fuß von der Parkstellung in die Betriebsstellung das Federelement elastisch verformt und so dem Verschwenken über ein vorgegebenes Schwenkwinkelintervall einen mechanischen Widerstand entgegensetzt. Es ist möglich, dass der Rastvorsprung an dem Spiegelträger und das Federelement an dem Fuß vorgesehen sind. Umgekehrt kann auch das Federelement an dem Spiegelträger und der Rastvorsprung an dem Fuß vorgesehen sein. Der Rastvorsprung kann sich in jede beliebige Richtung erstrecken. Beispielsweise kann sich der Rastvorsprung im Wesentlichen in Richtung einer Schwenkachse oder unter einem Winkel, beispielsweise einem rechten Winkel, dazu erstrecken.

Erfindungsgemäß besitzt der Fahrzeugspiegel eine Rastvorrichtung, die ausgebildet ist, um den Fuß und den Spiegelträger dann und nur dann reversibel zu verrasten, wenn der Spiegelträger bei nicht betätigtem Schwenkantrieb, beispielsweise manuell, verschwenkt wird. Der Schwenkantrieb ist beispielsweise durch einen Elektromotor, insbesondere einen selbsthemmenden Elektromotor gebildet, der ein Getriebe umfassen kann. Mit Hilfe des Schwenkantriebs kann der Fahrzeugspiegel automatisch von der Betriebs- in die Parkstellung gebracht werden, beispielsweise dann, wenn das Fahrzeug abgestellt oder durch eine Waschstraße gefahren werden soll. Wird der Spiegelträger jedoch bei nicht betätigtem, also unbestromtem, Schwenkantrieb verschwenkt, beispielsweise mit der Hand, so entkuppelt der Schwenkantrieb den Spiegelträger vom Fuß und die arretierende Wirkung des Schwenkantriebs entfällt. In dieser Situation stellt die Rastvorrichtung sicher, dass der Spiegelträger trotzdem nicht unbeabsichtigt aus der Parkstellung in die Betriebsstellung zurückklappt.

Bevorzugt ist der Schwenkantrieb selbsthemmend ausgebildet und besitzt im nicht betätigten Zustand ein Schwenkantrieb-Losbrechmoment, das größer ist als ein Rastkupplung-Losbrechmoment der Rastkupplung. Dadurch wird erreicht, dass dann, wenn der Spiegel manuell betätigt wird, die Schwenkbewegung ausschließlich in der Rastkupplung stattfindet. Die Rastvorrichtung ist dann ausgebildet, um nur dann in einer Parkstellung oder abgeklappten Stellung zu verrasten, wenn die Schwenkbewegung ausschließlich in der Rastkupplung stattfindet. Das geschieht beispielsweise dadurch, dass dann, wenn die Schwenkbewegung in der Rastkupplung stattfindet, der Spiegelträger sich translatorisch relativ zum Fuß bewegt, beispielsweise vom Fuß weg.

Bevorzugt umfasst der Schwenkantrieb eine Rastkupplung. Eine derartige Rastkupplung ist insbesondere dafür vorgesehen, um ein vom Schwenkantrieb unabhängiges, manuelles Verschwenken des Spiegelträgers relativ zum Fuß auch dann zu erlauben, wenn ein selbsthemmender Schwenkmotor vorhanden ist. Diese Rastkupplung ist bevorzugt ausgebildet zum reversiblen Verrasten von Fuß und Spiegelträger in der Betriebsstellung.

Es ist günstig, wenn die Rastkupplung so ausgebildet ist, dass ein Verschwenken des Spiegelträgers mittels Schwenkantrieb zu einer Schwenkbewegung auf einer ersten Höhe bezüglich der Schwenkachse und ein Verschwenken des Spiegelträgers bei stillstehendem Schwenkantrieb (manuelles Verschwenken) zu einer Schwenkbewegung auf einer zweiten Höhe bezüglich des Schwenkachse führt. Die erste Höhe und die zweite Höhe weisen einen Versatz zueinander auf. Das wird beispielsweise durch eine aus dem Stand der Technik bekannte 3-Zahn-Rastung erreicht.

Unter dem Merkmal, dass die Schwenkbewegung auf der zweiten Höhe bezüglich der Schwenkachse erfolgt, ist zu verstehen, dass bei stillstehendem Schwenkantrieb sich der Spiegelträger bei einem Verschwenken, beispielsweise mit der Hand, kurzzeitig parallel zur Richtung der Schwenkachse bewegt. Diese Bewegung kann beispielsweise entgegen einer Fixierfeder erfolgen.

Die Rastvorrichtung ist bevorzugt so ausgebildet, dass es ausschließlich dann zu einem Verrasten von Fuß und Spiegelträger kommt, wenn die Schwenkbewegung auf der zweiten Höhe stattfindet, das heißt dann, wenn der Spiegelträger ohne Verwendung des Schwenkantriebs verschwenkt wird, beispielsweise mit der Hand. Vorteilhaft hieran ist, dass dann, wenn der Spiegelträger mit der Hand verschwenkt wird, ein Ausklappen bzw. Verschwenken, beispielsweise während des Durchfahrens einer Waschstraße, sicher vermieden wird. Wird der Spiegelträger jedoch mittels des Schwenkantriebs beigeklappt, ist die Rastwirkung nicht notwendig, da der Schwenkantrieb in der Regel selbsthemmend ausgebildet ist. Bei einem Verschwenken mittels Schwenkantrieb findet die Schwenkbewegung auf der ersten Höhe statt und der Schwenkantrieb muss keinen zusätzlichen mechanischen Widerstand der Rastverbindung beim Zurückschwenken in die Betriebsstellung überwinden. Dadurch kann der Schwenkantrieb vorteilhafterweise kleiner ausgelegt werden.

Bei einer derartigen Rastverbindung umfasst der Rastvorsprung bevorzugt eine Ausnehmung und das Federelement besitzt einen Kontaktvorsprung, wobei die Ausnehmung so relativ zu dem Kontaktvorsprung angeordnet ist, dass bei einer Schwenkbewegung auf der zweiten Höhe der Kontaktvorsprung des Federelements jenseits der Ausnehmung mit dem Rastvorsprung in Kontakt kommt und dem Verschwenken über das vorgegebene Schwenkwinkelintervall den mechanischen Widerstand entgegensetzt und sich bei einer Schwenkbewegung auf der ersten Höhe der Kontaktvorsprung durch die Ausnehmung bewegt und ein Verschwenken über das vorgegebene Schwenkwinkelintervall keinen mechanischen Widerstand entgegensetzt. Vorteilhaft hieran ist die einfache technische Realisierbarkeit der Rastvorrichtung. Selbstverständlich ist auch die umgekehrte Anordnung denkbar, bei der das Federelement eine Ausnehmung besitzt und der Kontaktvorsprung am Rastvorsprung ausgebildet ist. Der Rastvorsprung kann beispielsweise am Fuß oder am Spiegelträger ausgebildet sein. Das Federelement ist entsprechend am Spiegelträger bzw. am Fuß ausgebildet oder befestigt.

Es hat sich als günstig erwiesen, wenn die Rastvorrichtung den Fuß und den Spiegelträger in der Parkstellung so verrastet, dass ein Losbrechmoment von mehr als 2 Nm notwendig ist, um den mechanischen Widerstand der Rastvorrichtung zu überwinden und den Spiegel zurück in die Betriebsstellung zu bringen. Günstig ist zudem, wenn das Losbrechmoment der Rastvorrichtung kleiner ist als das der Rastkupplung.

Im Folgenden wird eine Ausführungsform der Erfindung anhand der beigefügten Zeichnungen näher erläutert. Dabei zeigt
- Figur 1a: eine perspektivische Ansicht eines erfindungsgemäßen Fahrzeugspiegels in einer Betriebsstellung,
- Figur 1b: einen Ausschnitt aus Figur 1a,
- Figur 2a: den Fahrzeugspiegel nach Figur 1a in einer Parkstellung, die durch Verschwenken mittels eines Schwenkantriebs eingestellt wurde,
- Figur 2b: einen Ausschnitt aus Figur 2a,
- Figur 3a: den Fahrzeugspiegel gemäß der vorherigen Figuren in der Parkstellung, in die er durch ein manuelles Verschwenken bei stillstehendem Schwenkantrieb gebracht wurde,
- Figur 3b: einen Ausschnitt aus Figur 3a und
- Figur 4: einen Schnitt durch den Fahrzeugspiegel gemäß Figur 1 a und der Schnittebene B.

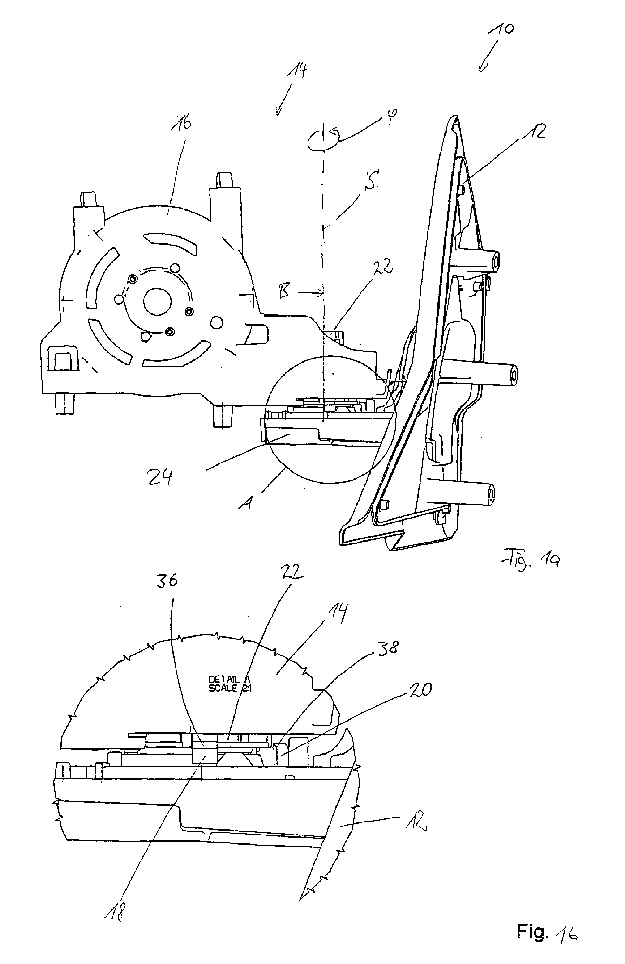

Figur 1a zeigt einen Fahrzeugspiegel 10 in Form eines Pkw-Spiegels, der einen Fuß 12 und einen Spiegelträger 14 umfasst. Der Fuß 12 ist ausgebildet, um den Fahrzeugspiegel 10 an einer vorderen Seite einer Tür eines Pkw zu befestigen. Der Spiegelträger 14 ist um eine Schwenkachse S an dem Fuß 12 gelagert und ist ausgebildet, um mit einem Spiegelhalter 16 ein nicht eingezeichnetes Spiegelelement in Form eines Glasspiegels aufzunehmen.

An dem Fuß 12 und dem Spiegelträger 14 ist eine in Figur 1b vergrößert dargestellte Rastvorrichtung vorgesehen, die als Rastpartner einen Rastvorsprung 18 und ein Federelement 20 umfasst. In der in den Figuren 1a und 1b gezeigten Betriebsstellung sind der Rastvorsprung 18 und das Federelement 20 voneinander beabstandet und beeinflussen einander nicht. Bei einem Verschwenken um einen Schwenkwinkel ϕ (Figur 1a), der von der Betriebsstellung aus gemessen wird, verringert sich der Abstand zwischen Rastvorsprung 18 und Federelement 20.

In Figur 1 a ist ein teilweise verdeckter Schwenkantrieb 22 erkennbar, der ein Drehmoment zwischen einem Horizontalabschnitt 24 des Fußes 12 und dem Spiegelträger 14 aufbringt.

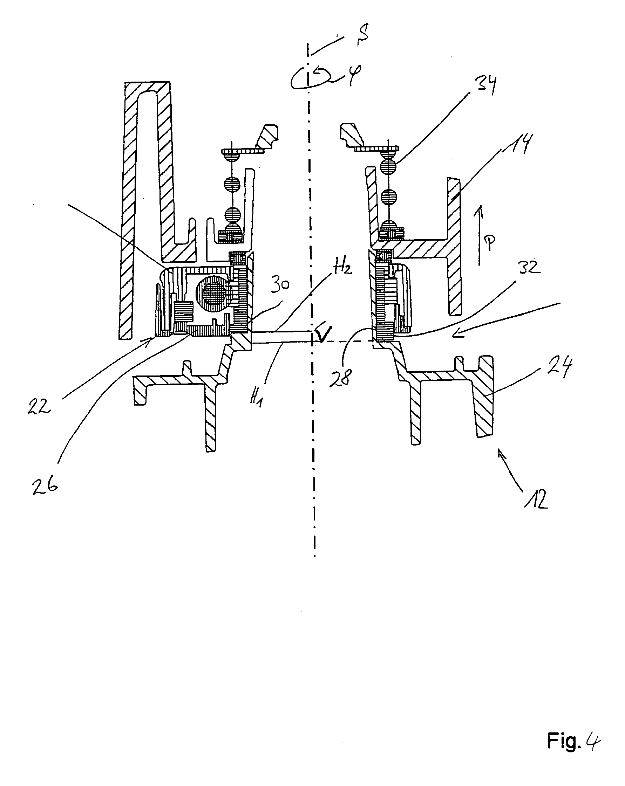

Figur 4 zeigt einen Schnitt entlang der Schwenkachse S in Blickrichtung B. Es ist zu erkennen, dass der Schwenkantrieb 22 starr mit dem Spiegelträger 14 verbunden ist. Mit dem Horizontalabschnitt 24 des Fußes 12 ist der Schwenkantrieb 22 über eine Rastkupplung 26 verbunden. Die Rastkupplung 26 ist eine herkömmliche 3-Zahn-Rastung, die eine erste Gleitfläche 28, die einen Zahngrund der Rastkupplung 26 darstellt, und eine zweite Gleitfläche 30, die ein gegenüber der ersten Gleitfläche 28 abgehobenes Niveau aufweist, besitzt. Die Rastkupplung arretiert eine Schwenkbewegung vom Fuß 12 zu dem Spiegelträger 14, 23nn zwischen beiden ein Drehmoment anliegt, das kleiner ist als ein Rastkupplung-Losbrechmoment M₂₆. Übersteigt das anliegende Drehmoment das Rastkupplungs-Losbrechmoment M₂₆, so gleiten die Gleitflächen aneinander ab. Der Spiegelträger 14 kann so in eine Parkstellung gebracht werden.

Der Schwenkantrieb 22 greift mit einem Zahn 32 in den Zahngrund der Rastkupplung 26 ein und steht somit in Kontakt mit der ersten Gleitfläche 28. In diese Position wird der Schwenkantrieb 22 durch eine Spannfeder 34 vorgespannt. Wenn der Schwenkantrieb 22 in Bewegung versetzt wird, so verschwenkt er den Spiegelträger 14 um die Schwenkachse S um den Schwenkwinkel ϕ, wobei bei dieser Schwenkbewegung der Zahn 32 stets in Kontakt mit der ersten Gleitfläche 28 bleibt und relativ zu dieser ruht. Die Bewegung des Spiegelträgers 14 vollzieht sich damit auf einer ersten Höhe H₁ bezüglich der Schwenkachse S Unter der Höhe H der Schwenkbewegung wird die Projektion eines festgelegten Punktes, beispielsweise der im vorliegenden Fall gewählten Spitze des Zahns 32, auf die Schwenkachse S verstanden.

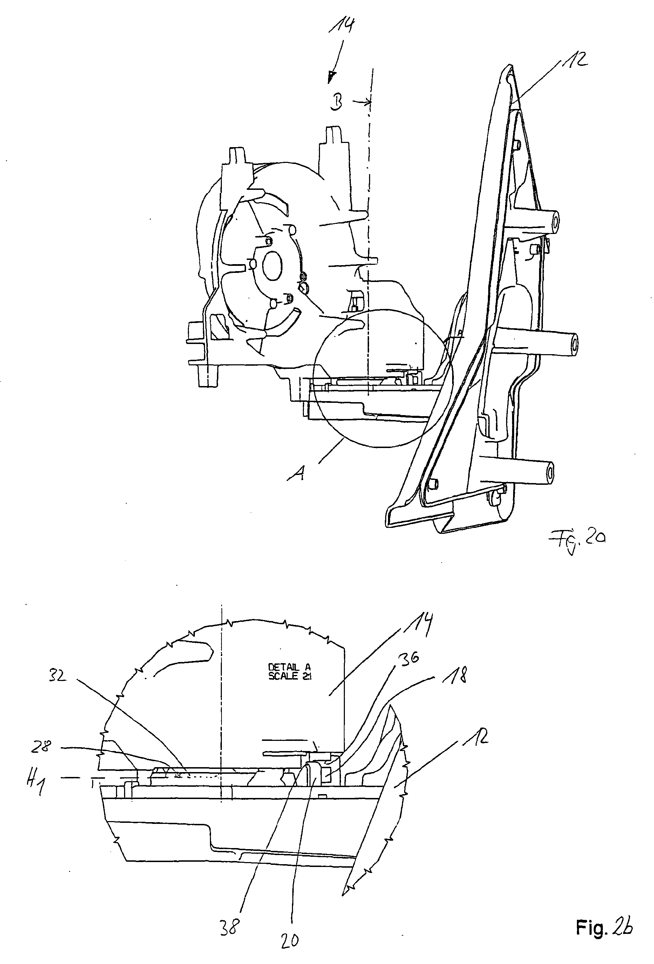

In den Figuren 2a und 2b ist die Parkstellung gezeigt, in die der Spiegelträger 14 mit Hilfe des Schwenkantriebs 22, der in den Figuren vom Spiegelträger 14 verdeckt ist, verschwenkt worden ist. Der Zahn 32 hat seine Position relativ zu der ersten Gleitfläche 28 nicht geändert, so dass die Schwenkbewegung auf der ersten Höhe H₁ stattgefunden hat.

In dem Rastvorsprung 18 ist eine Ausnehmung 36 vorgesehen, die bewirkt, dass ein Kontaktvorsprung 38, der an dem Federelement 20 ausgebildet ist, nicht mit dem Rastvorsprung 18 in Kontakt kommt. Beim Passieren des Rastvorsprungs 18 an dem Federelement 20 vorbei, kommt es damit zu keinerlei Wechselwirkung zwischen beiden und die von dem Schwenkantrieb 22 ausgelöste Schwenkbewegung wird nicht behindert.

Wenn nun beispielsweise mit der Hand versucht wird, den Spiegelträger 14 aus der in den Figuren 2a, 2b gezeigten Stellung in die in den Figuren 1 a bzw. 1 b gezeigte Betriebsstellung zurückzudrehen, so führt dies zu einer Bewegung des Zahns 32 relativ zu den gegenüberliegenden Gleitflächen der Rastkupplung 26, so dass der Zahn 32 von der ersten Gleitfläche 28 auf die zweite Gleitfläche 30 gleitet (Figur 4). Dabei bewegt sich der Spiegelträger 14 um einen Versatz V in Richtung eines Pfeils P entgegen der Vorspannkraft der Spannfeder 34 auf eine Höhe H₂ gegenüber der Schwenkachse S. Ein Drehen in dem Schwenkantrieb 22 ist nicht möglich, da der Schwenkantrieb 22 selbsthemmend ausgebildet ist. Um den Spiegelträger 14 wie beschrieben relativ zum Fuß 12 zu bewegen, ist daher ein Losbrechmoment M₂₆ notwendig. Der Index "26" deutet an, dass das Losbrechmoment von der Rastkupplung 26 verursacht wird.

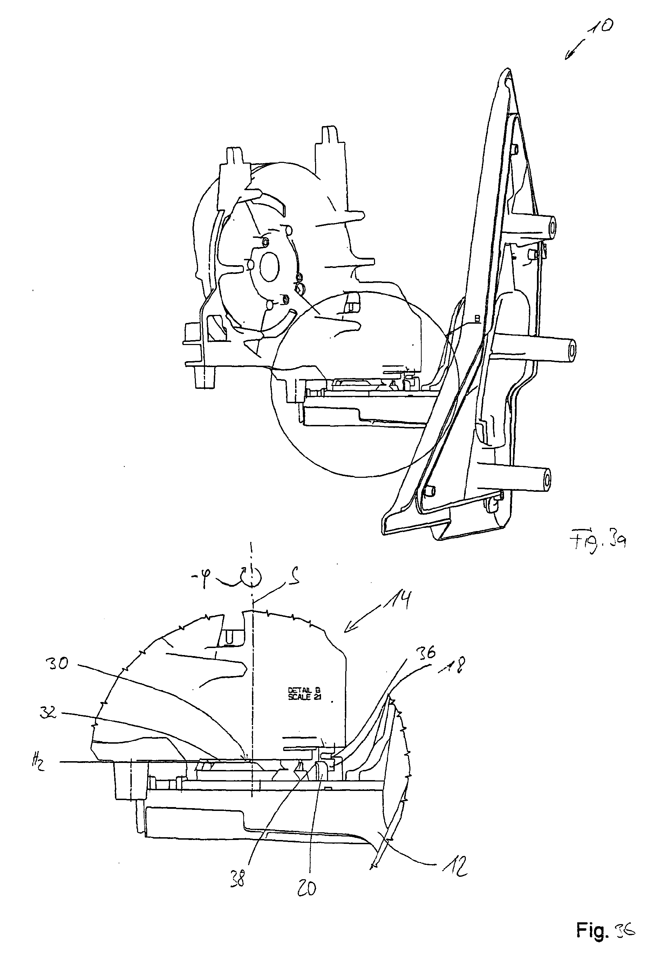

Figur 3b zeigt die Lage von Spiegelträger 14 relativ zu Fuß 12 bei einer Schwenkbewegung auf der zweiten.Höhe H₂. Es ist zu erkennen, dass die Ausnehmung 36 im Rastvorsprung 18 nunmehr auf einer anderen Höhe bezüglich der Schwenkachse S liegt als der Kontaktvorsprung 38 des Federelements 20. Bei einem Zurückschwenken um den Schwenkwinkel -ϕ kommt daher der Kontaktvorsprung 38 in Kontakt mit dem Rastvorsprung 18, wodurch sich das Federelement 20 nach radial außen elastisch verbiegt und dabei dem weiteren Schwenken einen mechanischen Widerstand entgegensetzt. Um diesen Widerstand zu überwinden, ist ein Losbrechmoment M₂₀ notwendig, wobei der Index "20" andeutet, dass das Losbrechmoment von dem Federelement 20 verursacht ist. Es ist vorteilhaft, wenn das Losbrechmoment M₂₀ im Wesentlichen so groß ist wie das Losbrechmoment M₂₆, das von der Rastkupplung 26 hervorgerufen wird.

Wird der Fahrzeugspiegel 10 aus der in den Figuren 1a und 1b gezeigten Betriebsstellung bei stillstehendem Schwenkantrieb 22, das heißt beispielsweise mit der Hand in die Parkstellung gebracht, so führt diese Schwenkbewegung zunächst dazu, dass der Zahn 32 (Figur 4) sich von der ersten Gleitfläche 28 löst und entgegen der Federkraft der Spannfeder 34 auf die zweite Gleitfläche 30 gelangt. Es kommt daher wieder zu dem Versatz V zwischen dem Fuß 12 und dem Spiegelträger 14. Bei einem weiteren Verschwenken, das dementsprechend auf der zweiten Höhe H₂ stattfindet, kommt der Kontaktvorsprung 38 (Figur 3b) kurz vor Erreichen der Parkstellung in Kontakt mit dem Federelement 20. Da das Verschwenken auf der zweiten Höhe H₂ stattfindet, ist die Ausnehmung 36 gegenüber dem Kontaktvorsprung 38 versetzt und bleibt unwirksam. Um den Spiegelträger 14 vollständig in die Parkstellung zu bringen, muss also das Losbrechmoment M₂₀ überwunden werden, um den Spiegelträger in die Parkstellung zu bringen. Auf diese Weise kommt es zu einem reversiblen Verrasten von Fuß 12 und Spiegelträger 14 in der Parkstellung.

Das Zusammenspiel der Rastvorrichtung, die durch den Rastvorsprung 18 und das Federelement 20 gebildet wird, einerseits und der Rastkupplung 26 andererseits, führt dazu, dass der Fuß und der Spiegelträger in der Parkstellung stets reversibel miteinander verrastet sind, egal ob diese Parkstellung mit Hilfe des Schwenkantriebs oder manuell eingestellt wurde. Wird per Schwenkantrieb verschwenkt, rührt die Rastwirkung von der bekannten 3-Zahn-Rastung her, wird manuell verschwenkt, rührt die Rastwirkung von der Rastvorrichtung her. Eine unbeabsichtigt aufgebrachte Kraft, wie beispielsweise durch die Bürsten einer Waschstraße, kann den Fahrzeugspiegel nicht wieder ausklappen und eine Beschädigung ist sicher ausgeschlossen.

### Bezugszeichenliste

- 10: Fahrzeugspiegel
- 12: Fuß
- 14: Spiegelträger
- 16: Spiegelhalter
- 18: Rastvorsprung

- 20: Federelement
- 22: Schwenkantrieb
- 24: Horizontalabschnitt
- 26: Rastkupplung
- 28: erste Gleitfläche

- 30: zweite Gleitfläche
- 32: Zahn
- 34: Spannfeder
- 36: Ausnehmung
- 38: Kontaktvorsprung

- S: Schwenkachse
- ϕ: Schwenkwinkel
- H₁: erste Höhe
- H₂: zweite Höhe
- V: Versatz

- M₂₆: Rastkuppfung-Losbrechmoment
- M₂₀: Losbrechmoment aufgrund der Rastvorrichtung

## Patentansprüche

1. Fahrzeugspiegel, insbesondere Pkw-Spiegel, mit
(a) einem Fuß (12), der ausgebildet ist zum Befestigen des Fahrzeugspiegels (10) an einem Fahrzeug,
(b) einem Spiegelträger (14), der an dem Fuß (12) verschwenkbar so gelagert ist, dass er in eine Betriebsstellung und eine Parkstellung bringbar ist,
(c) einem Schwenkantrieb (22) zum automatischen Verschwenken des Spiegelträgers (14) relativ zu dem Fuß (12) um eine Schwenkachse (S) und
(d) einer Rastvorrichtung (18, 20), die ausgebildet ist, um den Fuß (12) relativ zum Spiegelträger (14) in der Parkstellung reversibel zu verrasten,
**dadurch gekennzeichnet, dass**
(e) die Rastvorrichtung (18, 20) ausgebildet ist zum reversiblen Verrasten von Fuß (12) und Spiegelträger (14) ausschließlich dann, wenn der Spiegelträger (14) bei nicht betätigtem Schwenkantrieb (22) verschwenkt wird.

2. Fahrzeugspiegel nach einem der vorstehenden Ansprüche, **dadurch gekennzeichnet, dass** die Rastvorrichtung einen Rastvorsprung (18) und ein Federelement (20) umfasst, die so zueinander angeordnet sind, dass der Rastvorsprung (18) bei einem Verschwenken des Spiegelträgers (14) von der Parkstellung in die Betriebsstellung das Federelement (20) elastisch verformt und so dem Verschwenken über ein vorgegebenes Schwenkwinkelintervall einen mechanischen Widerstand entgegensetzt.

3. Fahrzeugspiegel nach einem der vorstehenden Ansprüche, **dadurch gekennzeichnet, dass** der Schwenkantrieb (22) eine Rastkupplung (26) umfasst.

4. Fahrzeugspiegel nach einem der vorstehenden Ansprüche, **dadurch gekennzeichnet, dass**
- der Schwenkantrieb (22) selbsthemmend ausgebildet ist und im nicht betätigten Zustand ein Schwenkantrieb-Losbrechmoment (M₂₂) besitzt,
- wobei das Schwenkantrieb-Losbrechmoment (M₂₂) größer ist als ein Rastkupplung-Losbrechmoment (M₂₆) der Rastkupplung (26).

5. Fahrzeugspiegel nach Anspruch 3 oder 4, **dadurch gekennzeichnet, dass** die Rastkupplung (26) ausgebildet ist zum reversiblen Verrasten von Fuß (12) und Spiegelträger (14) in der Betriebsstellung.

6. Fahrzeugspiegel nach Anspruch 3 bis 5, **dadurch gekennzeichnet, dass** die Rastkupplung (26) so ausgebildet ist, dass
- ein Verschwenken des Spiegelträgers (14) mittels Schwenkantrieb (22) zu einer Schwenkbewegung auf einer ersten Höhe (H₁) bezüglich der Schwenkachse (S) und
- ein, insbesondere manuelles, Verschwenken des Spiegelträgers (14) bei still stehendem Schwenkantrieb zu einer Schwenkbewegung auf einer zweiten Höhe (H₂) bezüglich der Schwenkachse (S) führt,
- wobei die erste Höhe (H₁) und die zweite Höhe (H₂) einen Versatz (V) zueinander aufweisen.

7. Fahrzeugspiegel nach Anspruch 6, **dadurch gekennzeichnet, dass** die Rastvorrichtung ausgebildet ist zum Verrasten von Fuß (12) und Spiegelträger (14) **ausschließlich dann, wenn die Schwenkbewegung auf der zweiten Höhe (H₂)** stattfindet.

8. Fahrzeugspiegel nach Anspruch 6 oder 7, **dadurch gekennzeichnet, dass**
- der Rastvorsprung (18) eine Ausnehmung (36) besitzt und
- das Federelement (20) einen Kontaktvorsprung (38) hat,
wobei die Ausnehmung (36) so relativ zu dem Kontaktvorsprung (38) angeordnet ist,
- dass bei einer Schwenkbewegung auf der zweiten Höhe (H₂) der Kontaktvorsprung (38) des Federelements (20) jenseits der Ausnehmung (36) mit dem Rastvorsprung (18) in Kontakt kommt und dem Verschwenken über das vorgegebene Schwenkwinkelintervall den mechanischen Widerstand entgegensetzt, und
- sich bei einer Schwenkbewegung auf der ersten Höhe (H₁) der Kontaktvorsprung (38) durch die Ausnehmung (36) bewegt und dem Verschwenken über das vorgegebene Schwenkwinkelintervall keinen mechanischen Widerstand entgegensetzt.

9. Fahrzeugspiegel nach einem der vorstehenden Ansprüche, **dadurch gekennzeichnet, dass** die Rastvorrichtung den Fuß (12) und den Spiegelträger (14) in der Parkstellung so verrastet, dass ein Losbrechmoment (M₂₆) größer ist als 2 Nm.

10. Personenkraftwagen mit einem Fahrzeugspiegel (10) nach einem der vorstehenden Ansprüche.
